# EUROPÄISCHE PATENTSCHRIFT

(11) **EP 0 461 567 B1**
(45) Veröffentlichungstag und Bekanntmachung des Hinweises auf die Patenterteilung: **05.04.1995**
(21) Anmeldenummer: 91109407.6
(22) Anmeldetag: 08.06.1991
(51) Int. Cl.: C08F 283/10, C09D 143/02

(54) **Wasserverdünnbare Bindemittel auf Epoxidharzbasis, Verfahren zu deren Herstellung und deren Verwendung für wässrige Überzugsmittel, sowie wässrige Überzugsmittel**
Water dilutable binding agents on the base of epoxy resin, process for their preparation and their use for aqueous coatings and aqueous coatings
Liants diluables dans de l'eau à base de résine d'époxyde, procédé pour leur préparation et leur utilisation pour revêtements aqueux ainsi que revêtements aqueux

(30) Priorität: 14.06.1990 DE 4019030
(43) Veröffentlichungstag der Anmeldung: 18.12.1991
(73) Patentinhaber: Herberts Gesellschaft mit beschränkter Haftung, 42285 Wuppertal (DE)
(72) Erfinder: Patzschke, Hans-Peter, Dr., W-5600 Wuppertal 2 (DE); Blum, Joachim, Dr., W-5630 Remscheid (DE); Friederichs, Gerhard, W-5600 Wuppertal 2 (DE); Bogdan, Wolfgang, W-5600 Wuppertal 1 (DE)
(74) Vertreter: Türk, Gille, Hrabal, Leifert

(56) Entgegenhaltungen:
- EP-A- 0 263 499
- DE-A- 3 627 860
- US-A- 3 925 506
- US-A- 4 467 071
- US-A- 4 504 633

## Beschreibung

Die Erfindung betrifft nach Neutralisation mit Basen wasserverdünnbare Bindemittel auf Epoxidharzbasis, die für wässrige Überzugsmittel geeignet sind. Sie betrifft auch das Verfahren zu deren Herstellung.

Stand der Technik ist die Herstellung von wasserverdünnbaren, gepfropften Epoxidharzen durch Reaktion von festen Epoxidharzen mit u.a. carbonsäurefunktionellen Monomeren, wie z.B. (Meth)acrylsäure in einem Säurezahlbereich von 30-220 mg KOH/g bezogen auf Festharz, wie beispielsweise in der DE 27 21 822 beschrieben.

In der DE-A-36 27 860 werden wäßrige Überzugsmittel mit Bindemitteln, erhältlich aus einem Epoxidharz, Polyesterpolycarbonsäuren und ungesättigten Monomeren die teilweise Carboxylgruppen enthalten, beschrieben.

Die Praxis zeigt, daß bei derartigen Dispersionen mit einer Säurezahl von < 50, bezogen auf Festharz, eine mangelnde Dispersionsstabilität zu beobachten ist, die zu großen Teilchen und Fällungserscheinungen führt. Wässrige Dispersionen gepfropfter Epoxidharze mit Säurezahl < 30 sind nicht stabil herstellbar. Für den Schutz metallischer Substrate ist es notwendig, Filme mit möglichst niedriger Säurezahl zu erhalten, um einen möglichst hohen Schutz des Metalls zu erreichen.

Aufgabe der Erfindung ist daher die Bereitstellung von wasserverdünnbaren Bindemitteln auf Epoxidharzbasis mit niedriger Säurezahl, die nach Neutralisation stabile wässrige Dispersionen bilden und zu einwandfreien Überzügen führen.

Überraschenderweise wurde gefunden, daß wasserverdünnbare Bindemittel, die gepfropfte Epoxidharze und ungepfropfte Epoxidharze sowie Additionspolymerisate und/oder -copolymerisate enthalten, mit niedrigerer Säurezahl als 50 stabil herstellbar sind und die vorstehend beschriebenen Nachteile nicht aufweisen, wenn als Säuren polymerisierbare, ungesättigte, phosphorsäurefunktionelle Monomere verwendet werden und eine Polymerisation oder Copolymerisation in Anwesenheit von Epoxidharzen mit freien Epoxidgruppen durchgeführt wird.

Gegenstand der Erfindung sind daher wasserverdünnbare Bindemittel auf Epoxidharzbasis mit einer Säurezahl von 5 bis 60, erhältlich durch Polymerisation oder Copolymerisation von
A) 10 bis 90 Gew.-Teilen eines oder mehrerer radikalisch polymerisierbarer saurer phosphorsäurefunktioneller ungesättigter Monomerer, die im Gemisch mit einem oder mehreren radikalisch polymerisierbaren ethylenisch ungesättigten Monomeren vorliegen können, unter Zusatz von 0,5 bis 15 Gew.-%, bezogen auf die eingesetzten Monomeren, eines Radikalinitiators, in Gegenwart von
B) 90 bis 10 Gew.-Teilen eines oder mehrerer Epoxidharze oder modifizierter Epoxidharze,
wobei sich die Gewichtsteile von A) und B) auf 100 Gew.-Teile addieren in einem oder mehreren Lösemitteln.

Bevorzugt weisen die erfindungsgemäßen Bindemittel eine Säurezahl unter 50 und insbesondere unter 30 auf. Die untere Grenze liegt bevorzugt bei 8, besonders bevorzugt bei 12.

Zur Herstellung der erfindungsgemäßen wasserverdünnbaren Bindemittel auf Epoxidharzbasis eignen sich als saure phosphorsäurefunktionelle ungesättigte Monomere beispielsweise solche der folgenden allgemeinen Formel 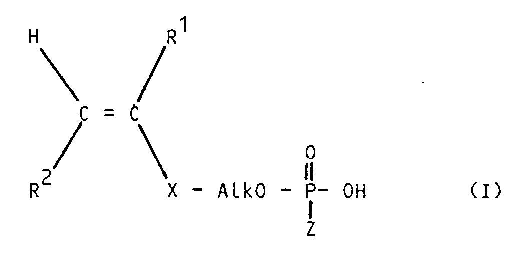
worin
- X =: 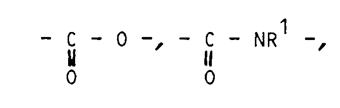 - CO - oder - CₙH₂ₙ-O-;
- Z =: - OH oder - OR⁴;
und
- Alk =: Alkylen mit der Formel - CₙH₂ₙ -, das durch OH-Gruppen substituiert sein kann oder Cycloalkylen mit der Formel - CₘH₂ₘ₋₂ -
- n =: 1 - 6
- m =: 5 - 6
- R¹ =: - H, Alkyl oder Cycloalkyl;
- R² =: - H oder - COOR³;
- R³ =: - H, Alkyl oder Cycloalkyl;
und
- R⁴ =: Alkyl oder Cycloalkyl
wobei die Reste R¹ gleich oder verschieden sein können.

Liegen OH-Subsituenten im Rest -AlKO- vor, so sind für den Rest AlKO die Gruppen -CH₂-CR¹(OH)-CH₂-O- und 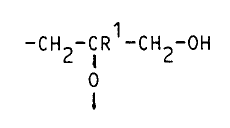
bevorzugte Beispiele,
worin R¹ die vorstehenden Bedeutungen hat.

In der vorliegenden Beschreibung und in den Patentansprüchen weisen, sofern nicht anders angegeben, Alkylgruppen bevorzugt 1 bis 4 Kohlenstoffatome und Cycloalkylgruppen bevorzugt 5 oder 6 Kohlenstoffatome auf.

In der vorstehenden allgemeinen Formel I ist die Alkylgruppe in der Bedeutung von -R¹ bevorzugt eine Methylgruppe. In der Alkylengruppe -AlK-ist n bevorzugt 2 oder 3.

Die Alkylreste der ungesättigten, phosphorsäurefunktionellen Monomeren können linear, verzweigt oder cycloaliphatisch aufgebaut sein. Die sterische Anordnung der Substituenten an der C=C-Doppelbindung kann(E-) und (Z)-Anordnung annehmen. Es können auch unterschiedliche phosphorsäurefunktionelle Monomere im Gemisch eingesetzt werden.

Besonders bevorzugt werden phosphorsäurefunktionelle Monomere der Formel (I) verwendet, in denen der Substituent-Z die Bedeutung von -OH hat.

Die Monomeren der Formel I sind dem Fachmann geläufig und können in üblicher Weise hergestellt werden. Es handelt sich teilweise um Handelsprodukte. Die Herstellung der Verbindungen der Formel I erfolgt beispielsweise durch Reaktion von Phosphoroxychlorid mit Hydroxyalkylestern oder -amiden entsprechender ungesättigter Carbonsäuren, wie (Meth)acrylsäure bzw. deren Derivate. Eine weitere Herstellungsmöglichkeit ist die Reaktion von Epoxidgruppen enthaltenden Derivaten ungesättigter Säuren, wie ungesättigte Glycidylester und deren Derivate und ungesättigte Glycidylamide, mit Phosphorsäuren, wie z. B. von Glycidylmethacrylat mit Orthophosphorsäure.

Die phosphorsäurefunktionellen sauren Monomeren können als solche oder zusammen mit einem oder mehreren radikalisch polymerisierbaren ethylenisch ungesättigten Monomeren in Gegenwart der Epoxidharz-Komponente B) radikalisch polymerisiert werden.

Die Zumischung der weiteren radikalisch polymerisierbaren Monomeren erfolgt in derartigen Mengen, daß in Abstimmung mit den übrigen Reaktionskomponenten A) und B) die gewünschten Säurezahlen der Endprodukte erhalten werden. Im allgemeinen kann hierzu die Menge der weiteren radikalisch polymerisierbaren Monomeren innerhalb der Komponente A) bis zu 95 Gew.-% betragen; sie liegt vorzugsweise bei 95 bis 30 Gew.-%, besonders bevorzugt 90 bis 60 Gew.-%, bezogen auf die Summe der sauren phosphorsäurefunktionellen Monomeren plus weitere radikalisch polymerisierbare Monomere.

Als weitere ethylenisch ungesättigte Monomere zur möglichen gemeinsamen Verwendung mit den phosphorsäurefunktionellen Monomeren der Komponente A) kommen praktisch alle radikalisch polymerisierbaren Monomeren in Frage, wobei jedoch die üblichen Einschränkungen für Copolymerisationen gelten, die durch das Q- und e-Schema nach Alfrey und Price bzw. die Copolymerisationsparameter vorgegeben sind (vgl. z.B. Brandrup und Immergut, Polymer Handbook, 3rd Edition, John Wiley und Sons, New York, 1989). Solche Monomere sind beispielsweise:
a) Radikalisch polymerisierbare Monomere, die keine weiteren reaktiven Gruppen enthalten, deren Auswahl nach den mechanischen Eigenschaften des Films und der Verträglichkeit der dabei eingesetzten Harzkombination erfolgen kann. Es werden Acrylsäure-alkylester, Methacrylsäure-alkylester, Maleinsäure- und/oder Fumarsäure-dialkylester eingesetzt, wobei die Alkylreste aus 1 bis 20 Kohlenstoffatomen bestehen und in linearer oder verzweigter aliphatischer Kette und/oder als cycloaliphatischer und/oder (alkyl)aromatischer Rest angeordnet sind. "Harte" Monomere mit einer hohen Glasübergangstemperatur als Homopolymere sind beispielsweise Monomere vom Vinylaromatentyp wie Styrol, α-substituierte Styrole wie α-Methylstyrol, o-, m- und p-Alkylstyrol wie Vinyltoluol oder p-tert-Butylstyrol, halogenierte Vinylbenzole, wie o- oder p-Chlorstyrol, Methacrylsäureester mit kurzer Kette, wie Methylmethacrylat, Ethylmethacrylat, Propylmethacrylat, Butylmethacrylat, Cyclohexylmethacrylat, Isobornylmethacrylat, Dihydrodicyclopentadienyl-methacrylat, (Meth)acrylamid N-substituierte (Meth)acrylamide und/oder auch (Meth)acrylnitril. "Weiche" Monomere sind dagegen Acrylsäureester mit einer langen Alkanolkette wie n-Butylacrylat, Isobutylacrylat, tert.-Butylacrylat, 2-Ethylhexylacrylat und/oder Laurylacrylat. Es können auch ungesättigte Ether, wie Ethoxyethyl(meth)acrylat oder Tetrahydrofurfuryl(meth)acrylat eingesetzt werden.
b) Einpolymerisierbare, hydroxylgruppenhaltige Monomere, die außer einer polymerisierbaren ethylenisch ungesättigten Gruppe noch mindestens eine Hydroxygruppe an einem Kohlenwasserstoffgerüst enthalten. Es sind hauptsächlich ungesättigte Veresterungsprodukte der allgemeinen Formel

   R''-CH=CR'-X-R''' (II)

   worin
   - R' =: -CₙH_{2n+1'} bevorzugt -CH₃, oder -H
   - R'' =: R' oder -XCₙH₂ₙ₊₁
   - R''' =: eine lineare oder verzweigte C₁₋₆-Alkylgruppe mit 1 - 3 OH-Gruppen
   - X =: -COO- oder -CONH- und
   - n =: 1 bis 6, bevorzugt 1 ist;
   wobei die Gruppen R' gleich oder verschieden sein können.
   Besonders geeignet sind (Meth)acrylsäure-hydroxyalkylester wie beispielsweise Hydroxyethylacrylat, β-Hydroxypropylmethacrylat, 1,4-Butandiol-4-monoacrylat, Propylenglykolmonoacrylat, 2,3-Dihydroxypropylmethacrylat, Pentaerythrit-monomethacrylat, Polypropylenglykol-monoacrylat oder auch Fumarsäure-dihydroxyalkylester, deren lineare, verzweigte oder cyclische Alkylgruppe 2 bis 20 Kohlenstoffatome enthält. Es können jedoch auch N-Hydroxy(C₂-C₁₅)alkyl(meth)acrylamide oder N-Hydroxy(C₂-C₁₅)alkyl-fumarsäure-diamide, bevorzugt z. B. N-Hydroxyethyl-acrylamid oder N-(2-Hydroxypropyl)methacrylamid eingesetzt werden. Besonders elastische Eigenschaften sind beim Einsatz eines Reaktionsprodukts von Hydroxyalkyl(meth)acrylat mit ε-Caprolacton zu erhalten.
   Der in der vorliegenden Beschreibung verwendete Ausdruck (Meth)acrylsäure bedeutet Methacrylsäure und/oder Acrylsäure; gleiches gilt für die entsprechenden Derivate, wie z.B. Ester und Amide.
c) α, β-ungesättigte Carbonsäureamide wie Maleindiamid, Fumarsäurediamid, Acrylsäureamid, Methacrylsäureamid, Itaconsäurediamid und deren Umsetzungsprodukte mit Formaldehyd, gegebenenfalls auch die entsprechenden Ether mit niedrigen Monoalkoholen, wie z.B. Methanol, aber auch Diacetonacrylamid- oder Methylacrylamidoglykolatmethylether, sowie cyclische Imide, wie Maleinimid und N-substituiertes Maleinimid, z.B. N-Phenyl-maleinimid. Bevorzugt werden Acrylsäureamid und Methacrylsäureamid eingesetzt.

Monomere vom Vinylestertyp, vorzugsweise Vinylester α-verzeigter Monocarbonsäuren, besonders der Versaticsäurevinylester oder auch N-Vinylpyrrolidon können auch einpolymerisiert werden, wenn geeignete Reaktionsbedingungen und Reaktionscomonomere ausgewählt werden.

Die Vinylmonomeren können für sich allein oder aber auch kombiniert zur Herstellung von Copolymeren eingesetzt werden. Darüber hinaus können auch gegebenenfalls geringe Anteile bifunktioneller Comonomerer, z. B. in Mengen von 0,1 bis 10 Gew.-%, vorzugsweise 1 bis 5 Gew.-%, bezogen auf die Gesamtmenge der Monomeren, verwendet werden.

Beispiele solcher Monomere sind Methylen-bis-acrylamid, Oligo-ethylenglykol-bis-acrylamid, Butandioldiacrylat, Hexandioldimethacrylat und Divinylbenzol, Reaktionsprodukte aus Diisocyanaten und ungesättigten Alkoholen oder veretherten Methylol(meth)acrylamiden mit OH- oder COOH-funktionellen Monomeren, sowie Reaktionsprodukte von ungesättigten Glycidylverbindungen mit carboxylgruppenhaltigen Monomeren.

Bevorzugt weisen die erfindungsgemäßen wasserverdünnbaren Bindemittel, die durch Pfropfpolymerisation der Monomeren der Komponente A) auf die Epoxidharzkomponente B) entstehen, keine freien Carboxylgruppen zusätzlich zu den sauren Phosphorsäure gruppen auf.
Jedoch erweist sich mitunter auch eine Mitverwendung von geringen Mengen α,β-ungesättigten Mono- und/oder Dicarbonsäuren wie Maleinsäure, Fumarsäure, Acrylsäure, Methacrylsäure oder Itaconsäure mit den Monomeren der Komponente A) als vorteilhaft. Es sollten jedoch nicht mehr als 50 % der Säurezahl durch carboxyl-funktionelle Monomere eingebracht werden.

Als Epoxidharze der Komponente B), in deren Anwesenheit die Polymerisation oder Copolymerisation der Monomeren der Komponente A) erfolgt, sind beispielsweise epoxidgruppenhaltige Polyglycidylether mit der folgenden idealisierten allgemeinen Formel III geeignet: 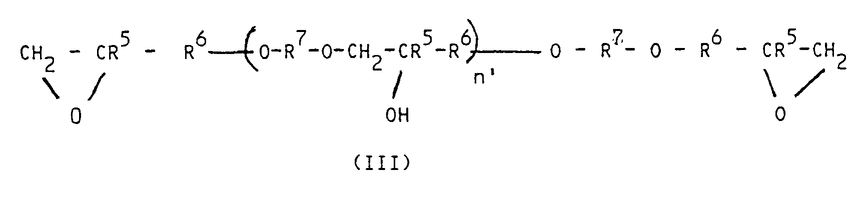
worin
- R⁵ =: Alkyl mit der Formel -C_{m'}H_{2m'+1}-und/oder bevorzugt -H;
- R⁶ =: -(CR⁵₂)_{m'}-, bevorzugt -CH₂-;
- R⁷ =: 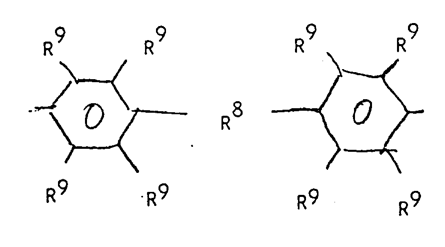
- R⁸ =: -SO₂- , -O- , bevorzugt -CR₂⁹- ;
- R⁹ =: Halogen oder R⁵, wobei die Reste R⁹ gleich oder verschieden sein können,
- n' =: 0 bis 15, bevorzugt 6 bis 13 ;
- m' =: 1 bis 8, bevorzugt 1, wobei die Reste R⁵ gleich oder verschieden sein können.

Besonders geeignete Beispiele sind Reaktionsprodukte verschiedener Molmasse aus Dihydroxy-diphenylpropan (Bisphenol A) oder Dihydroxy-diphenylmethan (Bisphenol F) und Epichlorhydrin und/oder Methylepichlorhydrin. Produkte mit höherer Molmasse können auch nach anderen Verfahren hergestellt werden, wie Umsetzung von flüssigen Polyepoxiden mit Bisphenol A. Diese Polyglycidylether haben ein Epoxid-Äquivalentgewicht von 180 bis 5000, besonders von 1500 bis 5000 speziell 2000 bis 4000. Sie weisen insbesondere eine Molmasse von 300 bis 8000 auf. Sie können teilweise oder vollständig hydriert sein oder in Gemischen mit unterschiedlichem Epoxid-Äquivalentgewicht oder mit unterschiedlicher Struktur eingesetzt werden. Geeignet sind auch Polyglycidylether von phenolischen Novolakharzen, wodurch die Funktionalität von 2 bis auf etwa 6 Glycidylgruppen pro Molekül gesteigert werden kann. Die Funktionalität der Harze kann dabei durch Reaktion mit monofunktionellen (Alkyl)phenolen oder Monocarbonsäuren, bevorzugt α-verzweigten Monocarbonsäuren herabgesetzt werden. Zum Elastifizieren kann ein Teil des beschriebenen Polyglycidylethers durch aliphatische Polyglycidylether der Formel 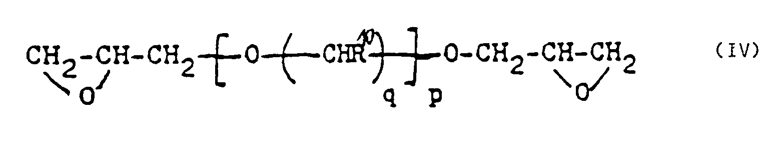
ersetzt werden, wobei R¹⁰ = H oder ein niedriger, gegebenenfalls mit verschiedenen Substituenten versehener Alkylrest ist und q = 2 bis 6 und p = 3 bis 50 bedeutet. Beispiele sind Reaktionsprodukte von Epichlorhydrin mit Polypropylenglykol oder Polybutylenglykol verschiedener Molmasse.
Die Epoxidharze können auch durch Reaktion mit längerkettigen Dicarbonsäuren wie Isophthalsäure, Cyclohexandicarbonsäure, Adipinsäure oder Sebacinsäure oder durch Reaktion mit langkettigen Polyalkoholen wie Hexandiol-1,6, Glycerin, Monoanhydropentaerythrit, Polytetrahydrofurandiol, Polycaprolactondiol, Polycaprolactamdiol oder Polybutadiendiol, sowie NCO-terminierten Reaktionsprodukten aus Polyalkoholen und Polyisocyanaten oder halbblockierten Diisocyanaten modifiziert sein oder stufenweise hergestellt werden.

Die Herstellung der erfindungsgemäßen, gepfropfte Epoxidharze enthaltenden Bindemittel erfolgt so, daß man eine entsprechende Monomerenmischung, die genügend saure phosphorsäurefunktionelle ungesättigte Verbindung enthält, um im Endprodukt eine Säurezahl von unter 60, bevorzugt unter 50, besonders bevorzugt unter 30 mg KOH pro g Festharz einzustellen, in Gegenwart eines geeigneten Radikalinitiators mit einem Epoxidharz in einem Lösemittel umsetzt. Die untere Grenze der Säurezahl beträgt 5, bevorzugt 8, besonders bevorzugt 12.

Die Menge an verwendetem Radikalinitiator beträgt hierbei 0,5 bis 15 Gew.-%, bezogen auf eingesetzte Monomere, bevorzugt über 2, besonders bevorzugt über 4 Gew.-% bezogen auf Monomere. Die obere Grenze der Initiatormenge liegt bei 15 Gew.-%, bevorzugt bei 12, besonders bevorzugt bei 8 Gew.-%. Als Radikalinitiatoren können die in der makromolekularen Chemie üblichen Verbindungen wie organische Peroxide oder organische Azoverbindungen verwendet werden. Die Radikalinitiatoren können einzeln oder im Gemisch verwendet werden.

Beispiele sind Peroxide wie Dialkylperoxide, z.B. Di-tert.-butylperoxid; Diacylperoxide, z.B. Dibenzoylperoxid; Peroxocarbonsäuren. z.B. Peroxoessigsäure; Peroxodicarbonate, z.B. Di-sec-butyl-peroxodicarbonat; Peroxidester, z.B. 2-Ethylhexansäure-tert-butyl-perester; Hydroperoxide, wie Cumolhydroperoxid; Ketonperoxide, wie Methylethylketonperoxid.

Beispiele für Azoverbindungen sind Azodinitrile, wie z.B. Azobisisobutyronitril und die entsprechend substituierten Verbindungen.

Besonders geeignete Initiatoren für die Pfropfpolymerisation stellt die Klasse der Diacylperoxide dar. Besonders bevorzugt wird Dibenzoylperoxid eingesetzt.

Die Herstellung erfolgt in einem Lösemittel bzw. Lösemittelgemisch. Bevorzugt werden mit Wasser mischbare Lösemittel eingesetzt. Beispiele für solche Lösemittel sind in Wasser lösliche, organische Verbindungen, wie lineare, verzweigte oder cycloaliphatische Alkohole, Alkylen- oder Polyethylenglykole, deren Mono- oder Diether oder -ester, Ketoalkohole oder cyclische Ether, wie z.B. n-Butanol, sec-Butanol, Butoxyethanol, Dipropylenglykoldimethylether, Ethylglykolacetat, Diacetonalkohol, Tetrahydrofuran oder Dioxan.

Wurden mit Wasser nicht mischbare Lösemittel eingesetzt, so müssen diese nach Neutralisation des erhaltenen Produkts und Verdünnen mit Wasser, entfernt werden, zum Beispiel durch Destillation.

Die für die Herstellung verwendete Lösemittelmenge hängt von den jeweils eingesetzten Ausgangsstoffen ab. Sie wird so gewählt, daß eine brauchbare Verarbeitungsviskosität des erhaltenen Endprodukts erzielt wird. Im allgemeinen erhält man diese bei einem Festkörpergehalt von beispielsweise bis zu 70 Gew.-% des Endproduktes.

Zur Herstellung wird das Epoxidharz im Lösemittel oder Lösemittelgemisch gelöst und mit den Monomeren und dem Radikalinitiator versetzt, worauf die Reaktion durch Erwärmen eingeleitet wird. Der Zusatz von Monomeren und Initiator kann im Gemisch oder getrennt erfolgen. Bevorzugt wird das Monomer/Initiator-Gemisch langsam verteilt über eine längere Zeit bei Reaktionstemperatur zugetropft, damit die Konzentration an Monomeren relativ klein ist.
Die Reaktion wird bei den üblichen, dem Fachmann bekannten Temperaturen durchgeführt, die an die Halbwertzeit des verwendeten Initiators angepaßt werden, z.B. im Bereich von 60 bis 180°C. Mit Dibenzoylperoxid kann die Reaktion beispielsweise bei 100 bis 140°C, besonders bevorzugt bei 110 bis 130°C durchgeführt werden. Unter diesen Bedingungen entsteht eine Mischung aus gepfropftem Epoxidharz, ungepfropftem Epoxidharz und Additionscopolymerisat. Die Säurezahl dieser Mischung liegt bei den oben genannten Werten und ist ausreichend, um nach Neutralisation mit einer Base, z.B. einer organischen Base, wie z.B. Ammoniak und/oder Aminen, bevorzugt Aminoalkoholen, eine Wasserverdünnbarkeit zu gewährleisten.

In dem erfindungsgemäßen wasserverdünnbaren Bindemittel beträgt die Menge der Epoxidharzkomponente bezogen auf Festharz mehr als 10 Gew.-%, bevorzugt mehr als 40 Gew.-% und bis zu 90 Gew.-%. Besonders gute Beschichtungsmittel erhält man bei einem Gewichtsanteil von 60 bis 90 Gew.-% Epoxidharz. Der restliche Gewichtsanteil wird aus den eingesetzten ungesättigten Monomeren sowie aus den eingebauten Spaltprodukten des Radikalinitiators gebildet.

Eine besondere Art der Herstellung besteht darin, daß entweder das phosphorsäurefunktionelle Monomere oder das damit gepfropfte Epoxidharz mit einer gesättigten Monoepoxidverbindung, wie z.B. Monoglycidylester, Monoglycidylether oder Monoepoxyalkane, wie z.B. Glycidylester der Versaticsäure (Cardura E-10®), Vinylglycidylether oder 1,2-Epoxyoctadecan umgesetzt und danach die entstehenden Di- oder Triester hydrolytisch mit Wasser aufgespalten werden.

Zur Herstellung von wässrigen Dispersionen werden die erfindungsgemäßen Bindemittel mit Ammoniak oder organischen Basen, z.B. Aminen, bevorzugt Aminoalkoholen neutralisiert. Bevorzugt sind tertiäre Amine und tertiäre Aminoalkohole. Bei der Verwendung von Ammoniak, primären und sekundären Aminen, müssen freie Epoxidgruppen, sofern noch vorhanden, vorher in üblicher Weise entfernt werden, z.B. durch Hydrolyse oder Reaktion mit H-reaktiven Verbindungen, wie z.B. Monophenolen, Mercaptanen, Monocarbonsäuren oder Monoalkoholen.

Beispiele für zur Neutralisation verwendbare Amine sind primäre, sekundäre und/oder tertiäre Alkylamine, wobei diese Amine gleiche oder unterschiedliche Alkyl- oder Alkanolreste enthalten. Spezielle Beispiele für Amine und Aminoalkohole sind Triethylamin, Diethylamin, Dimethylaminoethanol, Dimethylaminoisopropanol, Morpholin, N-Ethylmorpholin, Aminopropanol, Dimethylaminomethylpropanol, Diethanolamin, Triethanolamin.

Die Dispersion wird nach Neutralisation der Phosphorsäure- und/oder gegebenenfalls vorhandener Carboxylgruppen durch allmählichen Zusatz von Wasser unter gutem Rühren beispielsweise bei Temperaturen von 20 bis 95°C hergestellt. Die Dispersion hat im allgemeinen eine mittlere Teilchengröße von unter 1000 nm, bevorzugt unter 500 nm, besonders bevorzugt unter 300 nm.

Häufig kann es günstig sein, vor der Neutralisation gegebenenfalls vorhandene Phosphorsäure-di- und -triester hydrolytisch zu Monoestern aufzuspalten, um die gewünschte Löslichkeit zu erzielen und eine unerwünscht hohe Molmasse und hohe Viskositäten zu verringern. Beispielsweise kann dies mit genügenden Wassermengen bei Temperaturen von 50 bis 150°C, gegebenenfalls unter Druck, erzielt werden.

Zur Herstellung der Dispersionen können auch organische Lösemittel zugesetzt werden, z.B. um geeignete Viskositäten zu erzielen. Günstig ist es, solche zu verwenden, die bereits bei der Herstellung der wasserverdünnbaren Epoxidharze eingesetzt wurden. Beispiele sind in Wasser lösliche, organische Verbindungen, wie lineare, verzweigte oder cycloaliphatische Alkohole, Alkylen- oder Polyethylenglykole, deren Mono- oder Diether oder -ester, Ketoalkohole oder cyclische Ether, wie z.B. n-Butanol, sec-Butanol, Butoxyethanol, Dipropylenglykoldimethylether, Ethylglykolacetat, Diacetonalkohol, Tetrahydrofuran oder Dioxan. Es werden möglichst niedrige Mengen, das heißt, weniger als 15 Gew.-%, bevorzugt unter 5 Gew.-% organische Lösemittel, bezogen auf die Dispersion, eingesetzt.

Überschüssige Lösemittel können nach der Herstellung entfernt werden. Verwendet man beispielsweise für die Herstellung nicht-wassermischbare Lösemittel, dann können sie nach Neutralisation und Verdünnen mit Wasser abdestilliert werden.

Die erfindungsgemäßen wasserverdünnbaren Bindemittel auf Epoxidharzbasis sind für die Herstellung wässriger, hitzehärtbarer Überzugsmittel geeignet. Sie können zusammen mit üblichen Vernetzern verwendet werden.

Für die Herstellung von wässrigen, hitzehärtenden Überzugsmitteln mit Fremdvernetzern können beispielsweise 60 bis 95 Gew.-Teile des Bindemittels auf Basis der gepfropften Epoxidharze gemischt werden mit 5 bis 40 Gew.-Teilen eines üblichen Vernetzers, wie z. B. einem teilweise oder vollständig veretherten Amin-Formaldehyd-Kondensationsharz und/oder teilweise oder vollständig veretherten Phenol-Formaldehyd-Kondensationsharz und/oder blockiertem Polyisocyanat mit mindestens 2 reaktiven Stellen pro Molekül. Die Gewichtsteile beziehen sich jeweils auf den Harzfestkörper und addieren sich auf 100 Gew.-Teile. Das Vermischen erfolgt entweder vor der Neutralisation in der organischen Phase oder in der neutralisierten wäßrigen Dispersion bevorzugt bei Raumtemperatur oder durch kurzzeitiges Erhitzen auf bis zu 90°C.

Im folgenden werden Beispiele für verwendbare Vernetzer angegeben:
Amin-Formaldehyd-Kondensationsharze, die beispielsweise durch Reaktion von Aldehyden mit Harnstoff, N-Alkylharnstoff, Dicyandiamid, verschiedenen Triazinen, wie Melamin, Benzoguanamin und Acetoguanamin oder ihren Mischungen entstehen. Die Aldehyde können dabei monofunktionell, aber auch polyfunktionell sein. Beispiele hierfür sind Formaldehyd und seine Polymerisationsprodukte, wie Paraformaldehyd, Polyoxymethylen, Trioxan oder aliphatische und cyclische Aldehyde, wie Glyoxal, Acetaldehyd, Acrolein, Propionaldehyd, Butyraldehyd und Furfural. Je nach Reaktionsbedingungen (pH-Wert, Temperatur) und Methylolierungsgrad werden Harze mit verschiedenen Molmassen und unterschiedlicher Reaktivität erhalten. Die Kondensation mit Formaldehyd, Furfural, Paraformaldehyd, Polyoxymethylen oder Trioxan wird im allgemeinen unter Zusatz von schwachen Säuren oder Basen als Katalysator ausgeführt. Starke Säuren werden beispielsweise verwendet bei Kondensation mit Acrolein, Glyoxal, Acetaldehyd, Propionaldehyd oder Butyraldehyd. Hierbei wird das primäre Reaktionsprodukt neutralisiert, dann Aldehyd zugesetzt und unter Zusatz von schwachen Säuren oder Basen weiter reagiert. Der bevorzugte Aldehyd ist Formaldehyd. Die Alkoholgruppen₁ bevorzugt Methylolgruppen, der Aldehyd-Kondensationsprodukte werden teilweise oder bevorzugt vollständig mit Alkoholen verethert. Es werden solche Amin-Formaldehydharze bevorzugt, deren Hauptmenge an Methylolgruppen mit Monoalkoholen oder deren Gemischen umgesetzt ist. Besonders bevorzugt werden Methanol, Ethanol, Propanol, Butanol, Heptanol, Benzylalkohol und andere aromatische Alkohole, cyclische Alkohole, sowie Ethoxyethanol oder Butoxyethanol. Sollen Alkohole mit mehr als 4 C-Atomen eingebaut werden, so wird die Methylolgruppe erst mit einem niedrigeren Alkohol verethert und anschließend der höhere Alkohol durch Umetherung eingeführt. Die bevorzugten Alkohole sind niedere aliphatische Monoalkohole, wie Methanol und/oder Butanol und seine Isomeren. Besonders bevorzugt werden Melaminharze, die mit 3 bis 6 Molen Formaldehyd umgesetzt und anschließend vollständig mit Methanol verethert sind. Die Harze werden nach dem Stand der Technik hergestellt und von vielen Firmen als Verkaufsprodukte angeboten. Bei Veretherung mit Hydroxycarbonsäuren wie Hydroxybenzoesäure, Salicylsäure oder Dimethylolpropionsäure entstehen carboxylgruppenhaltige, bei Verwendung von Hydroxy-alkyl(meth)acrylaten oder Allylalkohol ungesättigte Melaminharztypen. Es können auch übliche carbamylmethylierte Melaminharze eingesetzt werden, die durch Reaktion von alkoxymethylierten Melaminharzen mit Alkylcarbamaten unter schwach sauren Bedingungen hergestellt werden.

Beispiele für bevorzugte Phenolharze, die als Vernetzer dienen können, sind Reaktionsprodukte von Phenol oder substituierten Phenolen mit verschiedenen Aldehyden im molaren Überschuß in Gegenwart alkalischer Katalysatoren (Resol-Typ.). Beispiele für phenolische Verbindungen sind Phenol, Kresol, Xylenol, Resorcin und substituierte Phenole wie p-tert.-Butylphenol, p-tert.-Amylphenol, p-Phenyl-phenol, Isothymol, Cardanol oder auch mehrkernige Phenole wie Dihydroxy-diphenylpropan (Bisphenol A) oder Dihydroxy-diphenylmethan (Bisphenol F). Als Ausgangsmaterial dienen auch phenolische Novolakharze, die gegebenenfalls mit Monocarbonsäuren, bevorzugt α-verzweigten Monocarbonsäuren, Monophenolen, die besonders mit C₂- bis C₁₈- Alkylgruppen substituiert sind oder auch Monoepoxiden wie α-Monoepoxidalkane, Monoglyceridether oder Monoglyceridester, defunktionalisiert werden. Als Aldehyde finden Verwendung Formaldehyd und seine Polymerisationsprodukte wie Paraformaldehyd, Trioxymethylen, Polyformaldehyd oder auch Hexamethylentetramin. Gut geeignet sind Acetaldehyd, Paraldehyd und Metaldehyd, sowie Butyraldehyd oder Furfural.
Die Methylolgruppen werden teilweise oder bevorzugt vollständig verethert mit Methanol, Ethanol, Propanol und/oder Butanol. Bevorzugt werden Harze, die pro phenolischer OH-Gruppe mit überschüssigem Formaldehyd, d.h. etwa 1.1 bis 2.5 Mol Formaldehyd in alkalischem Medium umgesetzt werden. Harze auf Basis Bisphenol A, die mit etwa 4 Formaldehyd-Molekülen umgesetzt und vollständig mit Butanol verethert sind, werden besonders bevorzugt. Es können sowohl wasserunlösliche, wie auch carboxylgruppenhaltige Phenolharze verschiedener Molmassen verwendet werden. Hierfür geeignete Phenolcarbonsäuren sind beispielsweise 4,4-Bis-(4-hydroxyphenyl)-pentansäure, Glykolsäurederivate von Bis-phenolen, wie das 2-(4-Hydroxyphenyl)-2(carbethoxyphenyl)-propan, oder Salicylsäure. Gegebenenfalls können auch sehr niedrigmolekulare, gegebenenfalls ungesättigte, Methylolphenolether eingesetzt werden wie Trimethylolphenolallylether (Methylonharze, Warenzeichen).

Eine weitere Gruppe von Beispielen für Vernetzungsmittel stellt die Klasse der verkappten Isocyanate dar. Als verkappte Isocyanate können beliebige Isocyanate verwendet werden, bei denen die Isocyanatgruppen mit einer Verbindung umgesetzt worden sind, die aktiven Wasserstoff enthält. Die verkappten Isocyanate reagieren bei erhöhter Temperatur, in der Regel zwischen etwa 90 und 220°C mit dem Basisharz. Blockierte Polyisocyanate werden z. B. dadurch hergestellt, daß man ein multifunktionelles Isocyanat mindestens mit einer stöchiometrischen Menge an einer monofunktionellen, aktiven Wasserstoff (Zerewitinoff-Reaktion) enthaltenden Verbindung zweckmäßig bei Temperaturen von 50 bis 80°C umsetzt, wobei gegebenenfalls übliche Katalysatoren, wie basische Katalysatoren, wie tertiäre Amine oder geringe Mengen an Zinnsalzen, wie Dibutylzinndilaurat, zugegeben werden können. Als Isocyanate werden Polyisocyanate oder entsprechende isocyanatgruppenhaltige Prepolymere verwendet. Die organischen Polyisocyanate weisen eine mittlere Molmasse von 112 bis 5000, bevorzugt 140 bis 1000, und zweckmäßig eine mittlere Isocyanatfunktionalität von 2 bis 8 auf. Geeignete Polyisocyanate sind beispielsweise Verbindungen der idealisierten Formel

E(N=C=O)ₛ (V)

in welcher
- E: für einen aromatischen, gegebenenfalls mit einem oder mehreren Alkylgruppen substituierten oder Methylenbrücken aufweisenden Kohlenwasserstoffrest mit insgesamt 6 bis 15 Kohlenstoffatomen, einen aliphatischen Kohlenwasserstoffrest mit 2 bis 18, vorzugsweise 6 bis 10 Kohlenstoffatomen, einen cyclischen Kohlenwasserstoffrest mit 6 bis 15 Kohlenstoffatomen oder einen heterocyclischen Ring und
- s: für eine Zahl von 2 bis 5, vorzugsweise 2 bis 3, steht.

Typische Beispiele für derartige Polyisocyanate sind Propylendiisocyanat, Ethylethylendiisocyanat, Dimethylethylendiisocyanat, Trimethylendiisocyanat, Tetramethylendiisocyanat, Pentamethylendiisocyanat, Hexamethylendiisocyanat, Trimethylhexandiisocyanat, 1,12-Dodecandiisocyanat, 1,18-Octadecandiisocyanat, Cyclopentandiisocyanat, Cyclohexan-1,3- und 1,4-diisocyanat, sowie beliebige Gemische dieser Isomeren, Methylcyclohexandiisocyanat, m- oder p-Tetramethylxyloldiisocyanat, 1-Isocyanato-3,3,5-trimethyl-5-isocyanatomethyl-cyclohexan, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Xylylendiisocyanat, Diphenylmethan-2,4'- und/oder -4,4'-diisocyanat, 3,2'- und/oder 3,4'-Diisocyanato-4-methyldiphenylmethan, Bisphenylendiisocyanat, Naphthylen-1,5-diisocyanat, Triphenylmethan-4,4',4''-triisocyanat, 2,2',4,4'-Tetraisocyanato-5,5'-dimethyltriphenylmethan, Diphenyltetraisocyanat oder Naphthyltetraisocyanat. Gemischt aliphatische/aromatische Verbindungen sind auch geeignet. Besonders bevorzugt werden großtechnisch erzeugte Diisocyanate wie Toluylendiisocyanat, Hexandiisocyanat, Isophorondiisocyanat oder Dicyclohexylmethan-diisocyanat.
Außer den beispielhaft genannten, niedermolekularen Polyisocyanaten können auch die in der Polyurethanchemie bekannten höhermolekularen Isocyanat-Polymere auf Basis urethangruppenfreier Polyisocyanate und höhermolekularer Polyhydroxyverbindungen als Polyisocyanatkomponente eingesetzt werden.
Zweckmäßig werden hierbei (n + 1) Mol der oben beschriebenen Diisocyanate mit n Mol einer gegenüber Isocyanat reaktiven difunktionellen Verbindung bei Temperaturen von zweckmäßig 50 bis 120°C in der Schmelze oder in Gegenwart inerter Lösemittel umgesetzt, die sowohl niedrigmolekular als auch hochmolekular mit einer Molmasse von 62 bis 5000, bevorzugt 90 bis 1000, sein können. Arbeitet man mit einem Überschuß an Diisocyanat, so muß das überschüssige Isocyanat wieder abdestilliert werden. Als niedermolekulare Dialkohole werden zweckmäßig die verschiedenen Isomere von linearen, verzweigten und cyclischen Kohlenstoffverbindungen mit 2 bis 20 Kohlenstoffatomen und zwei sekundären und/oder primären Hydroxylgruppen verstanden. Typische Beispiele hierfür sind Butandiol-1,4, Hexandiol-1,6, Trimethylhexandiol, Bis(hydroxymethyl)cyclohexan, Neopentylglykol, Hydroxypivalinsäureneopentylglykolester, N-Methyldiethanolamin oder Bis-ethoxyliertes Bisphenol A. Geeignete höhermolekulare Polyhydroxylverbindungen sind die aus der Polyurethanchemie bekannten Polyesterdiole, Polycaprolactondiole, Polycaprolactamdiole, Polyglykoletherdiole. Verwendet werden können auch langkettige primäre und sekundäre Diamine, wie Hexan-diamin-1,6, Addukte von 2 Mol Glycidylether oder Glycidylester an Hexandiamin, N,N'-Cyanethylethylendiamin oder Bis-N,N'-Cyanethylpolyoxypropylendiamin.

Als Polyisocyanate sind besonders gut die sogenannten "Lackpolyisocyanate" geeignet, die aus bekannten Diisocyanaten hergestellt werden. So entsteht aus Hexandiisocyanat und Wasser das Tris-(6-isocyanatohexyl)-biuret. Durch Trimerisation von Hexandiisocyanat erhält man Tris-(6-isocyanatohexyl)-isocyanurat, gegebenenfalls im Gemisch mit seinen höheren Homologen, sowie weiteren aus Isophorondiisocyanat, Diisocyanatotoluol oder Gemischen aus Diisocyanatotoluol und Hexamethylendiisocyanat aufgebauten Isocyanuratgruppen aufweisenden Polyisocyanaten. Sehr gut einsetzbare Polyisocyanate sind auch die Urethangruppen aufweisenden Polyisocyanate, die beispielsweise durch Umsetzung von überschüssigen Mengen an 2,4-Diisocyanatotoluol mit einfachen, mehrwertigen Alkoholen der Molmasse 62 bis 300, insbesondere Trimethylolpropan und gegebenenfalls destillative Entfernung des nicht umgesetzten Diisocyanatüberschusses erhalten werden können. So werden beispielsweise blockierte Triisocyanate oder blockierte höhermolekulare Reaktionsprodukte von Triisocyanaten mit Dialkoholen besonders bevorzugt. Bei dieser Umsetzung werden zweckmäßig ungefähr folgende Molverhältnisse eingehalten:
Triisocyanat : Diol : Schutzgruppe wie y : (y-1) : (y+2), wobei y = 1 bis 6, bevorzugt 2 bis 3 ist. Mittel, die die Isocyanate blockieren, enthalten nur eine einzige Amin-, Amid-, Imid-, Lactam-, Thio- oder Hydroxylgruppe.
Im allgemeinen werden flüchtige, aktiven Wasserstoff enthaltende Verbindungen mit niedrigen Molmassen, vorzugsweise von nicht mehr als 300, mehr bevorzugt von nicht mehr als 200, verwendet. So haben sich beispielsweise bewährt: aliphatische oder cycloaliphatische Alkohole, wie n-Butanol, 2-Ethylhexanol, Cyclohexanol, Phenole, tertiär-Butylphenole, Dialkylaminoalkohole wie Dimethylaminoethanol, Oxime wie Methylethylketoxim, Lactame wie ε-Caprolactam oder Pyrrolidon-2, Imide wie Phthalimid oder N-Hydroxy-maleinimid, Hydroxyalkylester, Malonsäure- oder Acetessigsäureester.

Es werden aber auch β-Hydroxyglykole oder -glykolether und Glykolamide empfohlen. Oxime und Lactame sind als Verkappungsmittel von besonderem Interesse, weil die damit verkappten Polyisocyanate bei relativ niedrigen Temperaturen reagieren. Zur Blockierung können auch mehr als eine Art von Schutzgruppe, bevorzugt solche mit unterschiedlicher Reaktivität, verwendet werden. Es ist so beispielsweise möglich, ein Gemisch von zwei oder mehreren unterschiedlich blockierten Polyisocyanaten zu verwenden oder ein Polyisocyanat einzusetzen, das mit zwei oder mehreren unterschiedlichen Schutzgruppen blockiert ist.

Die erfindungsgemäßen wasserverdünnbaren Bindemittel sind gut geeignet zur Herstellung von wäßrigen Überzugsmitteln. Sie werden hierzu, wie vorstehend beschrieben, mit Vernetzungsmitteln eingesetzt.

Die Erfindung betrifft somit auch wäßrige Überzugsmittel, die die erfindungsgemäßen nach Neutralisation mit Basen wasserverdünnten Bindemittel neben Vernetzern enthalten. Darüber hinaus können die wäßrigen Überzugsmittel Pigmente, Füllstoffe, organische Lösemittel sowie weitere lackübliche Additive enthalten. Sie können einen Festkörper von 20 bis 50 Gew.-% aufweisen.
Als Pigmente und Füllstoffe sind übliche anorganische oder organische Pigmente bzw. Füllstoffe geeignet. Im allgemeinen werden Pigmente und/oder Füllstoffe in derartigen Mengen eingesetzt, daß sich ein Verhältnis von Pigment zum erfindungsgemäßen Bindemittel von 0 bis 1,2 : 1, bezogen auf das Gewicht, ergibt.

Der Gesamtgehalt an Pigmenten, Füllstoffen und/oder weiteren Lackadditiven in dem wäßrigen Überzugsmittel beträgt bevorzugt bis zu 25 Gew.-%, bezogen auf das Gewicht der gesamten wäßrigen Dispersion.

Als organische Lösemittel werden lackübliche Lösemittel zugesetzt, beispielsweise solche, wie sie bei der Herstellung der Bindemittel angegeben wurden. Der Lösemittelgehalt der erfindungsgemäßen wäßrigen überzugsmittel kann beispielsweise bis zu 15 Gew.-% betragen.

Lackübliche Additive sind dem Fachmann geläufig, es kann sich beispielsweise um Vernetzungskatalysatoren, Korrosionsschutzinhibitoren, Verlaufsmittel, Antischaummittel oder Verdickungsmittel handeln.

Die unter Verwendung der erfindungsgemäßen Bindemittel hergestellten wäßrigen Überzugsmittel können in üblicher Weise auf verschiedene Substrate aufgebracht werden, insbesondere auf Metallsubstrate, wie Stahl, verzinnte Bleche und Aluminium. Der Auftrag kann beispielsweise durch Tauchen, Spritzen oder durch elektrophoretische Beschichtung erfolgen. Unter Verwendung der erfindungsgemäßen Bindemittel hergestellte Überzüge können in dünnen Schichten zu festhaftenden mechanisch und chemisch beständigen Überzügen verarbeitet werden, beispielsweise durch Trocknung bei erhöhten Temperaturen von 120 bis 250°C.

Besonders geeignet sind die erfindungsgemäßen Bindemittel zur Herstellung von Überzugsmitteln für die Dosenlackierung. Die Eigenschaftsvorteile in Haftung und Beständigkeit gegen chemische Beanspruchung sind bei verzinntem Stahl besonders günstig. Es liegt daher eine besondere Eignung für die Lackierung von Dosen aus verzinnten Blechen vor. Bevorzugt werden die Überzugsmittel als Klarlacke ohne Zusatz von Pigmenten und/oder Füllstoffen hergestellt.

Die folgenden Beispiele dienen zur Erläuterung der Erfindung.

### Herstellung der Bindemittel

### Beispiel 1

919,4 g eines handelsüblichen Epoxidharzes mit einem Epoxidäquivalentgewicht von 2.500-4.000 werden in einer Mischung aus 259,6 g Butylglykol, 474,4 g n-Butanol und 31,6 g Xylol unter Erwärmen auf 122°C gelöst. In die klare, heiße Lösung wird unter Rühren und Inertgasstrom eine Monomerenmischung aus 57,1 g Methacroyloxyethylmonophosphat, 176,5 g Styrol, 1,8 g Ethylacrylat und 16,4 g Benzoylperoxid, gelöst in 63,2 g Butylglykol, innerhalb 2 Stunden zugetropft.
Anschließend wird der Ansatz noch 3 Stunden bei 122°C gehalten. Man erhält eine Harzlösung mit einer Säurezahl von 21 mg KOH/g bezogen auf Festharz.

### Beispiel 2

Analog zu Beispiel 1 wird eine Harzlösung mit einer Säurezahl von 13 mg KOH/g bezogen auf Festharz erhalten, wenn als Monomerenmischung eine Kombination aus 32,9 g Methacroyloxyethylmonophosphat, 200,7 g Styrol und 1,8 g Ethylacrylat verwendet wird.

### Beispiel 3

Bei Verwendung einer Monomerenmischung aus 93,5 g Methacroyloxyethylmonophosphat, 140,1 g Styrol und 1,8 g Ethylacrylat erhält man analog zu Beispiel 1 eine Harzlösung mit einer Säurezahl von 33 mg KOH/g bezogen auf Festharz.

### Herstellung von wäßrigen Überzugsmitteln

Es wurden Überzugsmittel hergestellt durch Neutralisieren der in den vorstehenden Beispielen hergestellten Bindemittel auf Epoxidharzbasis, Verdünnen mit vollentsalztem Wasser auf einen Anteil von nichtflüchtigen Bestandteilen von etwa 24 Gew.-%, Zugabe der nachstehend erläuterten Vernetzer in verschiedenen Mengenverhältnissen, Auflackieren auf Platten aus Aluminium, elektrolytisch verzinntem Blech Und Stahl und Einbrennen der erhaltenen Filme. Anschließend wurde die Haftung durch Klebeband-Abriß-Test geprüft.
Außerdem wurde die Vernetzung durch Lösemittel-Wischtests untersucht.

### Beispiel 4

100 Gew.-Teile des Bindemittels nach Beispiel 1
1,5 Gew.-Teile Dimethylethanolamin,
130,0 Gew.-Teile vollentsalztes Wasser.
Das vollentsalzte Wasser wurde langsam zugefügt, wobei sich ein Wasserberg (Ansteigen der Viskosität) zeigte, der jedoch überschritten wurde. Zur Vernetzung wurde ein handelsübliches Phenol-Formaldehyd-Harz im Verhältnis 90:10 (bezogen auf das jeweilige Festkörpergewicht) verwendet. Die Proben wurden auf elektrolytisch verzinntes Blech mit dem Rakel oder durch Verspritzen auf eine Trockenfilmstärke von 8-10 »m aufgetragen und 10 Min. bei 200°C im Umluftofen getrocknet. Der Klebeband-Abriß-Test ergab eine gute Haftung. Der Lösemittel-Wischtest mit Methyl-ethyl-keton ergab eine gute Beständigkeit von 20 Double Rubs.

### Beispiel 5

100,0 Gew.-Teile des Bindemittels nach Beispiel 1,
3,0 Gew.-Teile Dimethylethanolamin,
127,0 Gew.-Teile vollentsalztes Wasser.
Das vollentsalzte Wasser ließ sich gut einarbeiten. Zur Vernetzung wurde ein handelsübliches Melaminharz (mit Methylalkohol verethertes Hexamethylmelamin, Cymel 303) im Gewichtsverhältnis 95:5 (bezogen auf den Festkörpergehalt) eingearbeitet. Es wurde weiter, wie für Beispiel 4 beschrieben, vorgegangen, wobei als Substrate Aluminiumplatten und Stahlplatten verwendet wurden.
Bei einer Auflage von 8-10 »m ergab sich eine gute Haftung bei 18 Double Rubs auf Elektrolytblech; auf Aluminium war die Haftung ebenfalls gut. Die Lösemittelbeständigkeit ergab 26 Double Rubs.

### Beispiel 6

100,0 Gew.-Teile des Bindemittels nach Beispiel 3,
3,0 Gew.-Teile Dimethylethanolamin,
132,0 Gew.-Teile vollentsalztes Wasser.
Es wurde eine 100%-Neutralisation durchgeführt. Dabei wurde, wie in Beispiel 5 beschrieben, vorgegangen. Als Vernetzer wurde das in Beispiel 5 verwendete handelsübliche Melaminharz verwendet. Die verwendeten Verhältnisse von Bindemittel/Vernetzer sind als "Bindemittel-Verhältnis" in der folgenden Tabelle angegeben (bezogen auf das jeweilige Festkörpergewicht). In der nachfolgenden Tabelle wurden als Substrate elektrolytisch verzinntes Blech, Aluminiumplatten und sandgestrahltes Stahlblech verwendet. Die Ergebnisse für die Haftung (Klebeband) und den Methyl-Ethyl-Keton-Lösemitteltest (MEK-Test) sind für die jeweiligen Schichtstärken (Auflage) angegeben. Die getesteten Überzugsmittelproben waren nach 14-tägiger Lagerung bei Raumtemperatur unverändert stabil.

**Tabelle (zu Beispiel 6)**

| elektrolytisch verzinntes Blech | | | |
|---|---|---|---|
| Bindemittel-Verhältnis | 95:5 | 93:7 | 90:10 |
| Auflage | 8-10 »m | 8-10 »m | 8-10 »m |
| MEK-Test | 28 DH | 60 DH | > 100 DH |
| Haftung | gut | gut | gut |

| Aluminiumplatte | | | |
|---|---|---|---|
| Bindemittel-Verhältnis | 95:5 | 93:7 | 90:10 |
| Auflage | 8-10 »m | 8-10 »m | 8-10 »m |
| MEK-Test | 25 DH | 40 DH | 90 DH |
| Haftung | gut | gut | gut |

| Stahlblech, sandgestrahlt | | | |
|---|---|---|---|
| Bindemittel-Verhältnis | 95:5 | 93:7 | 90:10 |
| Auflage | 15-20 »m | 15-20 »m | 15-20 »m |
| MEK-Test | 25 DH | 65 DH | > 100 DH |
| Haftung | gut | gut | gut |

## Patentansprüche

1. Nach Neutralisation mit Basen wasserverdünnbare Bindemittel auf Epoxidharzbasis mit einer Säurezahl von 5 bis 60, erhältlich durch Polymerisation oder Copolymerisation von
A) 10 bis 90 Gew.-Teilen eines oder mehrerer radikalisch polymerisierbarer saurer phosphorsäure funktioneller ungesättigter Monomerer, die im Gemisch mit einem oder mehreren radikalisch polymerisierbaren ethylenisch ungesättigten Monomeren vorliegen können, unter einem Zusatz von 0,5 bis 15 Gew.-%, bezogen auf die eingesetzten Monomeren, eines Radikalinitiators, in Gegenwart von
B) 90 bis 10 Gew.-Teilen eines oder mehrerer Epoxidharze oder modifizierter Epoxidharze,
wobei sich die Gewichtsteile von A) und B) auf 100 Gew.-Teile addieren
in einem oder mehreren Lösemitteln.

2. Wasserverdünnbares Bindemittel auf Epoxidharzbasis nach Anspruch 1, worin das zur Herstellung verwendete Epoxidharz ein Polyglycidylether eines oder mehrerer Bisphenole mit einer Molmasse von 300 bis 8000 ist, der teilweise durch aliphatische Polyglycidylether ersetzt sein kann.

3. Wasserverdünnbare Bindemittel auf Epoxidharzbasis nach Anspruch 1 oder 2, worin das zur Herstellung verwendete radikalisch polymerisierbare phosphorsäurefunktionelle ungesättigte Monomere eine Verbindung der folgenden allgemeinen Formel ist: 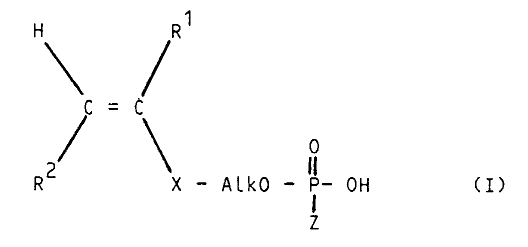 worin
X = 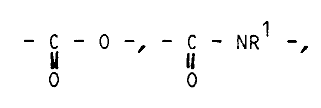 - CO - oder - CₙH₂ₙ-O-;
Z = - OH oder - OR⁴;
und
Alk = Alkylen mit der Formel - CₙH₂ₙ -, das durch OH-Gruppen substituiert sein kann oder Cycloalkylen mit der Formel - CₘH₂ₘ₋₂ -
n = 1 - 6
m = 5 - 6
R¹ = - H, Alkyl oder Cycloalkyl;
R² = - H oder - COOR³;
R³ = - H, Alkyl oder Cycloalkyl;
und
R⁴ = Alkyl oder Cycloalkyl
wobei die Reste R¹ gleich oder verschieden sein können.

4. Verfahren zur Herstellung der wasserverdünnbaren Bindemittel auf Epoxidharzbasis nach einem der Ansprüche 1 bis 3, dadurch gekennzeichnet, daß man
in Gegenwart von einem oder mehreren Lösemitteln
A) 10 bis 90 Gew.-Teile eines oder mehrerer radikalisch polymerisierbarer saurer phosphorsäurefunktioneller ungesättigter Monomerer, die im Gemisch mit einem oder mehreren radikalisch polymerisierbaren ethylenisch ungesättigten Monomeren vorliegen können, unter Zusatz von 0,5 bis 15 Gew.-%, bezogen auf die eingesetzten Monomeren, eines Radikalinitiators, in Gegenwart von
B) 90 bis 10 Gew.- Teilen eines oder mehrerer Epoxidharze oder modifizierter Epoxidharze, polymerisiert
wobei sich die Gewichtsteile von A) und B) auf 100 Gew.-Teile addieren,
und nach Neutralisation mit Basen, mit Wasser verdünnt.

5. Verfahren nach Anspruch 4, dadurch gekennzeichnet, daß in der Komponente A) radikalisch polymerisierbare ethylenisch ungesättigte Monomere in einer derartigen Menge zugesetzt werden, daß sich eine Säurezahl des Bindemittels von 5 bis 60 ergibt.

6. Verwendung der wasserverdünnbaren Bindemittel auf Epoxidharzbasis nach einem der Ansprüche 1 bis 3 zur Herstellung von wäßrigen Überzugsmitteln.

7. Wäßriges Überzugsmittel mit einem Festkörper von 20 bis 50 Gew.-% enthaltend ein durch Neutralisation mit Basen wasserverdünnbares Bindemittel in Kombination mit einem Vernetzungsmittel sowie gegebenenfalls Pigmenten, Füllstoffen, organischen Lösemitteln und/oder lacküblichen Additiven, dadurch gekennzeichnet, daß es bezogen auf den Harzfestkörperanteil
A) 60 bis 95 Gew.-% eines Bindemittels nach einem der Ansprüche 1 bis 3 und
B) 5 bis 40 Gew.-% eines oder mehrerer Vernetzer auf der Basis von teilweise oder vollständig veretherten Amin- und/oder Phenol-Formaldehyd-Kondensationsharzen und/oder blockierten Polyisocyanaten enthält.

8. Wäßriges Überzugsmittel nach Anspruch 7, dadurch gekennzeichnet, daß es 0 bis 15 Gew.-% eines oder mehrerer organischer Lösemittel und
0 bis 25 Gew.-% Pigmente, Füllstoffe und/oder andere lackübliche Additive,
jeweils bezogen auf das Gewicht des gesamten überzugsmittels, enthält.

9. Wäßriges Überzugsmittel nach Anspruch 7 oder 8, dadurch gekennzeichnet, daß es als Klarlack formuliert ist.

10. Verwendung der wäßrigen Überzugsmittel nach einem der Ansprüche 7 bis 9 zur Lackierung von Dosen.

## Claims

1. Epoxy resin bonding agents having an acid number of from 5 to 60, which are water-thinnable after neutralisation with bases and are obtainable by polymerisation or copolymerisation of
A) from 10 to 90 parts by weight of one or more radically polymerisable acidic phosphoric acid functional unsaturated monomers, which can be present mixed with one or more radically polymerisable ethylenically unsaturated monomers, with an addition of from 0.5 to 15% by weight, referred to the monomers used, of a radical initiator, in the presence of
B) from 90 to 10 parts by weight of one or more epoxy resins or modified epoxy resins,
wherein the parts by weight of A) and B) add up to 100 parts by weight,
in one or more solvents.

2. Water-thinnable epoxy resin bonding agent according to claim 1, wherein the epoxy resin used for the preparation is a polyglycidyl ether of one or more bisphenols having a molar mass of from 300 to 8000, which can be partly substituted by aliphatic polyglycidyl ethers.

3. Water-thinnable epoxy resin bonding agents according to claim 1 or 2, wherein the radically polymerisable phosphoric acid functional unsaturated monomer used for the preparation is a compound of the following general formula: 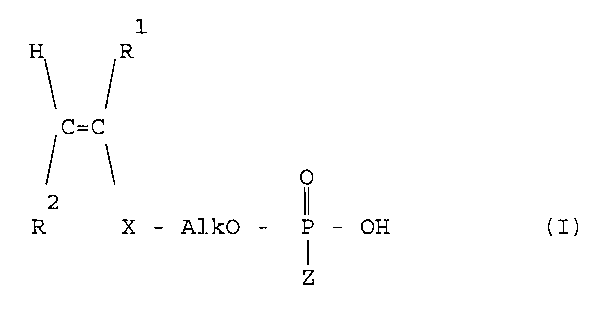 wherein
X = 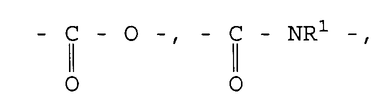 - CO - or - CₙH₂ₙ - O -;
Z = - OH or - OR⁴;
and
Alk = alkylene having the formula - CₙH₂ₙ - , which can be substituted by OH groups, or cycloalkylene having the formula - CₘH₂ₘ₋₂ -
n = 1 to 6
m = 5 to 6
R¹ = - H, alkyl or cycloalkyl;
R² = - H or COOR³;
R³ = - H, alkyl or cycloalkyl;
and
R⁴ = alkyl or cycloalkyl,
wherein the radicals R¹ can be identical or different.

4. Method for the preparation of water-thinnable epoxy resin bonding agents according to one or more of claims 1 to 3 characterised in that, in the presence of one or more solvents,
A) from 10 to 90 parts by weight of one or more radically polymerisable acidic phosphoric acid functional unsaturated monomers, which can be present mixed with one or more radically polymerisable ethylenically unsaturated monomers, with addition of from 0.5 to 15% by weight, referred to the monomers used, of a radical initiator, are polymerised in the presence of
B) from 90 to 10 parts by weight of one or more epoxy resins or modified epoxy resins,
wherein the parts by weight of A) and B) add up to 100 parts by weight,
and, after neutralisation with bases, are thinned with water.

5. Method according to claim 4, characterised in that radically polymerisable ethylenically unsaturated monomers are included in the component A) in a quantity such that the resulting acid number of the bonding agent is from 5 to 60.

6. Use of the water-thinnable epoxy resin bonding agents according to one of claims 1 to 3 for the preparation of aqueous coating agents.

7. Aqueous coating agent having a solids content of from 20 to 50% by weight, containing a bonding agent which is water-thinnable by neutralisation with bases, in combination with a cross-linking agent as well as optionally pigments, fillers, organic solvents and/or conventional additives for coatings, characterised in that it contains, referred to the proportion of solid resin,
A) from 60 to 95% by weight of a bonding agent according to one of claims 1 to 3 and
B) from 5 to 40% by weight of one or more cross-linking agents based on partly or completely etherified amine- and/or phenol-formaldehyde condensation resins and/or blocked polyisocyanates.

8. Aqueous coating agent according to claim 7, characterised in that it contains from 0 to 15% by weight of one or more organic solvents and from 0 to 25% by weight of pigments, fillers and/or other conventional additives for coatings, in each case referred to the weight of the entire coating agent.

9. Aqueous coating agent according to claim 7 or 8, characterised in that it is formulated as a transparent coating.

10. Use of the aqueous coating agents according to one of claims 7 to 9 for the coating of cans.

## Revendications

1. Liants diluables à l'eau après neutralisation par des bases, à base de résines époxydiques et à un indice d'acide de 5 à 60, obtenus par polymérisation ou copolymérisation de
A) 10 à 90 parties en poids d'un ou plusieurs monomères insaturés acides à fonctions acide phosphorique, aptes à la polymérisation radicalaire, qui peuvent être en mélange avec un ou plusieurs monomères à insaturation éthyléniques aptes à la polymérisation radicalaire, avec une adjonction de 0,5 à 15% en poids, par rapport aux monomères mis en oeuvre, d'un inducteur radicalaire, en présence de
B) 90 à 10 parties en poids d'une ou plusieurs résines époxydiques ou résines époxydiques modifiées, la somme des parties en poids de A) et B) étant égale à 100 parties en poids, dans un ou plusieurs solvants.

2. Liant diluable à l'eau à base de résines époxydiques selon la revendication 1, pour lesquels la résine époxydique utilisée à la préparation est un éther polyglycidylique d'un ou plusieurs bis-phénols de masse moléculaire 300 à 8000, qui peut être remplacé en partie par des éthers polyglycidyliques aliphatiques.

3. Liants diluables à l'eau à base de résines époxydiques selon la revendication 1 ou 2, pour lesquels le monomère insaturé à fonctions acide phosphorique apte à la polymérisation radicalaire utilisé à la préparation est un composé de formule générale : 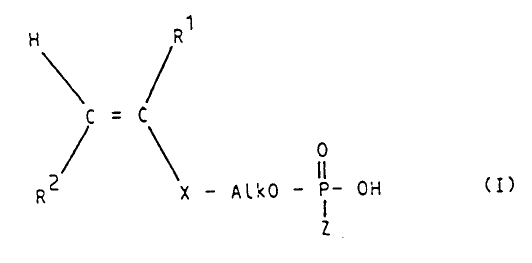 dans laquelle
X = 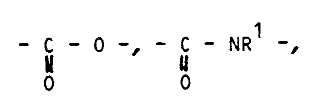 - CO - ou - CₙH₂ₙ-O-;
Z = - OH ou - OR⁴ ;
et
Alk = alkylène de formule - CₙH₂ₙ -, qui peut être substitué par des groupes OH, ou cycloalkylène de formule -CₘH₂ₘ₋₂-,
n = 1 à 6,
m = 5 à 6,
R¹ = -H, alkyle ou cycloalkyle,
R² = -H ou -COOR³,
R³ = -H, alkyle ou cycloalkyle, et
R⁴ = alkyle ou cycloalkyle,
les substituants R¹ pouvant être identiques ou différents.

4. Procédé de préparation des diluants diluables à l'eau à base de résines époxydiques selon l'une des revendications 1 à 3, caractérisé en ce que l'on polymérise, en présence d'un ou plusieurs solvants :
A) 10 à 90 parties en poids d'un ou plusieurs monomères insaturés acides à fonctions acide phosphorique, aptes à la polymérisation radicalaire, qui peuvent être mélangés avec un ou plusieurs monomères à insaturation éthylénique aptes à la polymérisation radicalaire, avec adjonction de 0,5 à 15% en poids, par rapport aux monomères mis en oeuvre, d'un inducteur radicalaire, en présence de
B) 90 à 10 parties en poids d'une ou plusieurs résines époxydiques ou résines époxydiques modifiées, la somme des parties en poids de A) et B) étant égale à 100 parties en poids, et après neutralisation par des bases, on dilue par de l'eau.

5. Procédé selon la revendication 4, caractérisé en ce que, dans le composant A), on ajoute des monomères à insaturation éthylénique aptes à la polymérisation radicalaire en quantité telle que l'on obtienne un indice d'acide de 5 à 60 pour le liant.

6. Utilisation des liants diluables à l'eau à base de résines époxydiques selon l'une des revendications 1 à 3, pour la préparation de produits de revêtement aqueux.

7. Produit de revêtement aqueux à une teneur en matières solides de 20 à 50% en poids, contenant un liant diluable à l'eau après neutralisation par des bases en combinaison avec un agent réticulant et le cas échéant des pigments, des matières de charge, des solvants organiques et/ou des additifs usuels pour les peintures et vernis, caractérisé en ce qu'il contient, sur les matières solides résineuses
A) 60 à 95% en poids d'un liant selon l'une des revendications 1 à 3 et
B) 5 à 40% en poids d'un ou plusieurs agents réticulants à base de résines de condensation amine- et/ou phénol-formaldéhyde partiellement ou totalement éthérifiées et/ou de polyisocyanates bloqués.

8. Produit de revêtement aqueux selon la revendication 7, caractérisé en ce qu'il contient de 0 à 15% en poids d'un ou plusieurs solvants organiques et 0 à 25% en poids de pigments, de matières de charge et/ou d'autres additifs usuels pour les peintures et vernis, dans les deux cas par rapport au poids du produit de revêtement total.

9. Produit de revêtement aqueux selon la revendication 7 ou 8, caractérisé en ce qu'il est formulé en vernis clair.

10. Utilisation des produits de revêtement aqueux selon l'une des revendications 7 à 9 pour le revêtement de boites métalliques.
